(19) Europäisches Patentamt / European Patent Office / Office européen des brevets

(11) **EP 3 349 051 B1**

(12) **EUROPEAN PATENT SPECIFICATION**

(45) Date of publication and mention
of the grant of the patent:
**20.05.2020 Bulletin 2020/21**

(21) Application number: **15903319.0**

(22) Date of filing: **07.09.2015**

(51) Int Cl.:
*G02B 27/01* *(2006.01)*    *G02B 27/00* *(2006.01)*

(86) International application number:
**PCT/CN2015/089068**

(87) International publication number:
**WO 2017/041212 (16.03.2017 Gazette 2017/11)**

(54) **COLLIMATION DISPLAY APPARATUS, AND VEHICLE-MOUNTED OR AIRBORNE HEAD-UP DISPLAY APPARATUS**

KOLLIMATIONSANZEIGEVORRICHTUNG UND FAHRZEUGMONTIERTE ODER LUFTGESTÜTZTE HEAD-UP-ANZEIGEVORRICHTUNG

APPAREIL D'AFFICHAGE À COLLIMATION, ET APPAREIL D'AFFICHAGE TÊTE HAUTE EMBARQUÉ OU AÉROPORTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.07.2018 Bulletin 2018/29**

(73) Proprietor: **Luoyang Institute of Electro-Optical Equipment of AVIC**
**Henan Province (CN)**

(72) Inventors:
• **LI, Mingsuo**
**Beijing 100085 (CN)**
• **ZHOU, Yongjun**
**Beijing 100085 (CN)**
• **XIAO, Bing**
**Beijing 100085 (CN)**

• **HUANG, Tao**
**Beijing 100085 (CN)**
• **SHEN, Shumei**
**Beijing 100085 (CN)**
• **LONG, You**
**Beijing 100085 (CN)**

(74) Representative: **Grünecker Patent- und Rechtsanwälte**
**PartG mbB**
**Leopoldstraße 4**
**80802 München (DE)**

(56) References cited:
**WO-A1-2014/180991     WO-A1-2014/203534**
**CN-A- 102 866 500     CN-A- 102 880 337**
**JP-A- S6 438 718       JP-A- H10 177 148**
**US-A1- 2014 055 863**

## Description

### Technical Field

The present invention relates to the field of optics, and more particularly to a collimation display apparatus, and vehicle-mounted or airborne head-up display apparatus. US 2014/055863 A1 discloses an image display apparatus including an original image forming unit. WO 2014/180991 A1 discloses a multi-aperture projection display.

### Background

The head-up display apparatus with large field of view and large exit pupil can be widely applied to the conveyance, such as military aircrafts, special vehicles, and passenger aircrafts, and has various advantages such as large field of view, full field of view when the eye pupils are moving in a large area, and accurate superimposition with the actual scene. The most typical application is the Head Up Display (HUD) on a fighter aircraft, which is also the flight assistance instrument commonly used on other aircrafts. Utilizing the principle of optical imaging, the HUD displays important flight-related information at infinity just in front of the aircraft. Pilots looking forward through the HUD can easily mix the scene of outside world with data displayed by the HUD together. Because it is a collimation display, images reflected into the eyes are always parallel to the medial axis of the aircraft, so the pilot's height and attitude do not cause deviation to the angle of pitch or visual sight. The purpose of HUD is to allow pilots not to look down to see the instrument display and data so that they can always keep looking up, whereby the time period between looking up and down to ignore the rapid changes of the external environment may be reduced and the delay and discomfort caused by continuous adjustment of focal length of the eyes may be eased.

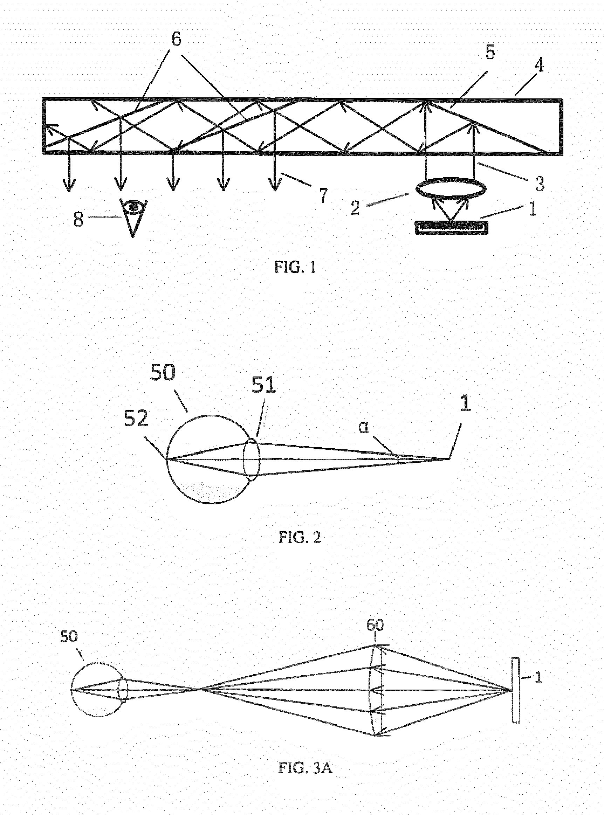

In order to realize collimation display with large field of view and large exit pupil, the traditional catadioptric type light path HUD display generally has a large volume and weight, and limited field of view and exit pupil, thus cannot meet the needs of airborne and vehicle-mounted systems. In addition, a waveguide-type HUD is available in the prior art. Fig. 1 illustrates operation of a waveguide-type collimation display apparatus in the prior art. As shown in Fig. 1, an image on the image source 1 is collimated by the relay lens 2 to produce the display effect of a large field of view and a small exit pupil. The collimated light beam 3 is reflected by the coupling lens 5 and then totally reflected and transmitted between the upper and lower surfaces of the waveguide element 4. The waveguide element 4 comprises two pupil expanders 6 plated with a certain reflectivity. The light beam 3 passing through the corresponding reflecting surface of the pupil expanders 6 is partially transmitted and partially reflected, whereby expanded light beam 7 is obtained that can be seen in a large range by human eye 8. To avoid double image, it is required that the parallelism between upper and lower surfaces of the waveguide element 4 is extremely high, about 5 arc seconds and that the parallelism between the pupil expanders is about 5 arc seconds. As a result, the machining and assembly of the waveguide element 4 is very difficult and the system has a large volume and weight. Holographic waveguide is similar to waveguide and the difference is that the former uses the holographic grating to achieve the expansion of the beam. In addition to the similar high requirement on the parallelism between the upper and lower total reflecting surfaces, the fabrication of the holographic film is extremely difficult and costly.

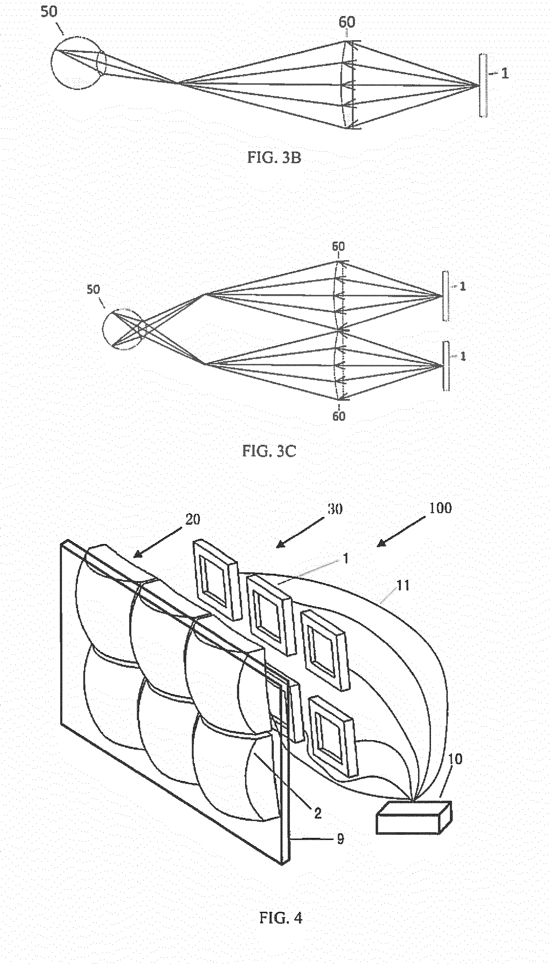

Chinese patent application CN102880337 discloses a display apparatus that forms a real image of the image provided by the image source at a limited distance through a refraction module. References are made to Figs. 2-3C, among which Fig. 2 illustrates the human eye imaging, Fig. 3A illustrates the imaging in human eye by a single image generation unit, Fig. 3B illustrates the imaging in human eye by a single image generation unit when the human eye is moving, and Fig. 3C illustrates the imaging in human eye by two image generation units that are stitched together. As shown in Fig. 2, the human eye 50 comprises a crystalline lens 51 corresponding to an imaging convex lens which images an image source (or object, real image) 1 at a point on the retina 52. As shown in Fig. 3A, the display apparatus forms a real image point at a limited distance through a refraction module 60 from a point of the image source 1, and the real image point is formed on the retina 52 of the human eye 50 via the crystalline lens 51. When the human eye moves, as shown in Fig. 3B, the image point of the real image point at the retina 52 also changes. As shown in Fig. 3C, a larger field of view is produced by the image generation units that are stitched together, but the exit pupil diameter is not increased.

Thus, the existing collimation display apparatuses with large field of view and large exit pupil generally have disadvantages such as large size, large weight, high processing difficulty, and high cost.

### Summary

In view of the above drawbacks of the prior art, it is an object of the present invention to provide a collimation display apparatus and a vehicle-mounted or airborne head-up display apparatus capable of overcoming the drawbacks that the existing collimation display apparatuses and HUD apparatuses are large in size and weight, difficult to manufacture, and expensive.

In order to achieve the above object, the present invention provides a collimation display apparatus as specified in claim 1 comprising: at least two groups of collimation display sub-modules, each group of collimation display sub-modules comprises an image source and a relay lens, wherein the image source provides an image; and the relay lens is arranged on an emergent light path of the image source, and projects the image provided by the image source into a virtual image at infinity, the relay lens comprises a plurality of optical lenses arranged along an axis, the contour of the optical lens, which is on the outermost side and the farthest from the image source, is rectangular, and the relay lens is densely arranged.

The present invention can also be further implemented using the following technical measures.

The collimation display apparatus further comprises an image source driving circuit for providing drive and image data for each of the image sources.

The exit pupil of each of the relay lenses is on the outermost optical lens.

The optical lens close to the image source has a smaller aperture that the outermost optical lens.

The image source driving circuit provides same image data for the image sources.

The image source may be a liquid crystal display (LCD) panel, a liquid crystal on silicon (LCOS) panel, an organic light emitting diode (OLED) panel, a plasma display panel, a digital micromirror device (DMD) panel, or a laser scanner.

The optical axes of the collimation display sub-modules are parallel to each other.

The collimation display apparatus may be used in a vehicle-mounted or airborne head-up display apparatus.

In order to achieve objections above, the present invention also provides a vehicle-mounted head-up display apparatus comprising the collimation display apparatus described above and a transparent reflecting mirror that is arranged on an emergent light path of the collimation display apparatus and reflects an image emitted from the collimation display apparatus at infinity.

The transparent reflecting mirror may be a front windshield of the vehicle.

The present invention also provides an airborne head-up display apparatus comprising the collimation display apparatus described above and a transparent reflecting mirror that is arranged on an emergent light path of the collimation display apparatus and reflects an image emitted from the collimation display apparatus at infinity.

The transparent reflecting mirror may be a front windshield of the aircraft.

Compared with the prior art, the present invention has obvious advantages and advantageous effects. By means of the above technical solutions, the collimation display apparatus and vehicle-mounted or airborne head-up display apparatus is compact in structure, light in weight, and low in the requirement of the luminance. The collimation display apparatus and head-up display apparatus according to the present invention have a wide field of view.

## Brief Description of the Drawings

Fig. 1 illustrates operation of a collimation display apparatus of a waveguide-type head-up display apparatus in the prior art;

Fig. 2 illustrates the principle of human eye imaging;

Fig. 3A illustrates the imaging in human eye by an image generation unit that forms an image at a limited distance in the prior art;

Fig. 3B illustrates the imaging in human eye by an image generation unit that forms an image at a limited distance when the eyes are moving in the prior art;

Fig. 3C illustrates the imaging in human eye by image generation units that form an image at a limited distance in the prior art, the units being stitched together;

Fig. 4 illustrates the structure of a preferred embodiment of the collimation display apparatus according to the present invention;

Fig. 5A illustrates the imaging of the collimation display sub-modules of the collimation display apparatus according to the present invention;

Fig. 5B illustrates the imaging of the collimation display sub-modules of the collimation display apparatus when the eyes are moving according to the present invention;

Fig. 6 illustrates the imaging of the collimation display sub-modules of the collimation display apparatus according to the present invention, the collimation display sub-modules being stitched together;

Fig. 7 illustrates the structure of a preferred embodiment of the transflective vehicle-mounted or airborne transflective head-up display apparatus according to the present invention; and

Fig. 8 illustrates a preferred embodiment of the direct-view collimation display apparatus according to the present invention.

**Detailed Description of the Invention**

In order to make clear the technical approaches that the present invention takes for achieving one or more goals and its effects, the collimation display apparatus, and vehicle-mounted or airborne head-up display apparatus as proposed in the present invention will be detailed below with reference to the drawings in terms of specific embodiments, methods, steps, structures, features and effects.

Fig. 4 illustrates the structure of a preferred embodiment of the collimation display apparatus according to the present invention. The collimation display apparatus 100 in the preferred embodiment of the present invention comprises a plurality of image sources 1 and a plurality of relay lenses 2.

The image sources 1 are arranged to provide an image. The plurality of image sources 1 form an image source array 30 according to a preset arrangement. In this embodiment, six image sources 1 are arranged in matrix in a plane to form an image source array 30. In other embodiments, the preset arrangement may be linear arrangement, circular arrangement, curve arrangement, three-dimensional arrangement, or spherical arrangement. The image source 1 may be but not limited to a liquid crystal display (LCD) panel, a liquid crystal on silicon (LCOS) panel, an organic light emitting diode (OLED) panel, a plasma display panel, a digital micromirror device (DMD) panel, or a laser scanner or other display devices.

The relay lens 2 is arranged on an emergent light path of the image source 1 and projects the image provided by the image source into a virtual image at infinity. One of the relay lenses 2 and one of the image sources 1 together constitute a collimation display sub-module. The plurality of relay lenses 2 forms a relay lens array 20 according to a preset arrangement. The relay lens 2 comprises a plurality of optical lenses arranged along an axis. The exit pupil of each of the relay lenses 2 is on a mirror surface of the optical lens which is the farthest from the image source. In this embodiment, the contour of the optical lens on the outermost side of the optical lens 2 is rectangular and corresponds to the respective rectangular exit pupil. The rectangular lens of the respective relay lenses 2 are densely arranged to achieve large size exit pupil through sub-aperture stitching.

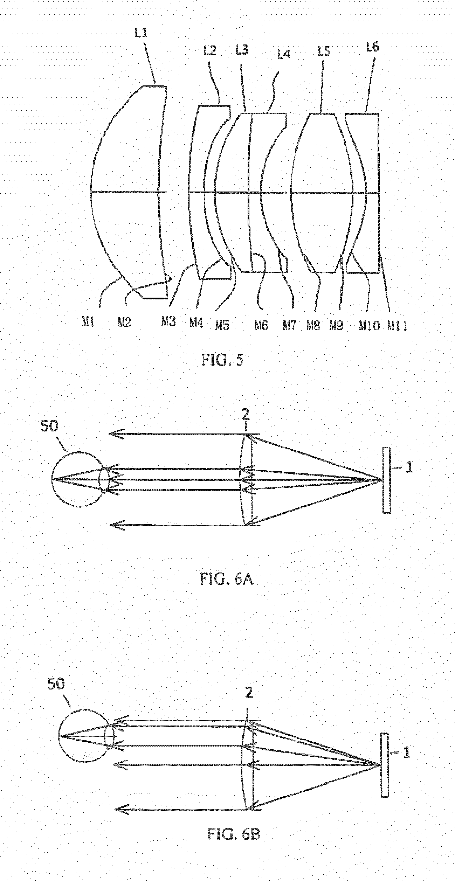

Fig. 5 illustrates the structure of a preferred embodiment of the relay lens 2 according to the present invention. In this embodiment, the relay lens 2 comprises: a first lens element L1 comprising a first lens surface M1 on which the diaphragm is disposed and a second lens surface M2, having a positive focal power and convex to the image space; a second lens element L2 comprising a third lens surface M3 and a fourth lens surface M4, having a negative focal power and convex to the image space; a third lens element L3; a fourth lens element L4; wherein the third and fourth lens elements are a doublet having a positive focal power and comprising a fifth lens surface M5, a sixth lens surface M6 and a seventh lens surface M7; a fifth lens element L5 that is a biconvex lens having a positive focal power and comprising an eighth lens surface M8 and a ninth lens surface M9; and a sixth lens element L6 having a negative focal power and comprising a tenth lens surface M10 and a eleventh lens surface M11.

The relay lens 2 in this embodiment has advantages such as large relative aperture, compactness and large field of view, with a total length of less than or equal to 42 mm and a relative aperture of 1/1.02.

According to the relay lens 2 in this embodiment, the first lens surface M1 of the first lens element L1, the fourth lens surface M4 of the second lens element L2, the ninth lens surface M9 of the fifth lens element L5, and the tenth lens surface M10 of the sixth lens element L6 are aspheric.

Preferably, the formula of the aspheric lens surfaces (M1, M4, M9, M10) is:

$$Z(h) = \frac{ch^2}{1 + \sqrt{1 - (1+k)c^2h^2}} + Ah^4 + Bh^6 + Ch^8 + Dh^{10} + Eh^{12} + Fh^{14}$$

wherein:

Z indicates the distance (or vector height) from the aspheric vertex when the aspheric surface is in the position of height h along the optical axis;

h indicates the distance from any point on the aspheric surface to the optical axis, different h values will produce different vector heights, and the vector height of the aspheric vertex is 0;

c=1/r; r indicates the radius of curvature of the lens surface; k indicates the conic coefficient; A, B, C, D, E and F are the higher-order aspheric coefficients. Table 1 shows the values of K, A, B, C, D, E, and F.

Table 1

| Lens Surface | K | A | B | C |
|---|---|---|---|---|
| M1 | -0.261 | 4.691E-006 | 2.059E-008 | 3.198E-011 |
| M4 | -6.412 | 1.287E-004 | 1.61E-008 | 4.31E-010 |
| M9 | -2.041 | -1.049E-005 | -4.931E-007 | 8.147E-009 |
| M10 | 0.702 | 1.223E-004 | 6.31E-007 | 2.089E-008 |

Table 1 (continued)

| Lens Surface | D | E | F |
|---|---|---|---|
| M1 | 5.453E-013 | -1.892E-015 | 4.913E-018 |
| M4 | 8.737E-011 | -1.017E-012 | 6.084E-015 |
| M9 | -3.208E-011 | | |
| M10 | -1.954E-010 | 5.126E-013 | 7.019E-015 |

The values of A, B, C, D, E, and F are indicated in scientific notation. For example, E-05 means $10^{-5}$.

In this embodiment, the optical axes of the collimation display sub-modules are parallel to each other.

The collimation display apparatus 100 of the present invention further comprises an image source driving circuit 10, a protection module 9 and a connection cable 11. The image source drive circuit 10 provides drive and image data for the image source 1 via the connection cable 11. The image sources 1 are all provided with the same image data. The protection module 9 is used for sealing protection of the entire photoelectric system (the collimation display apparatus 100) and formed of transparent material such as glass, transparent plastic, and transparent resin.

According to the collimation display apparatus 100 of the present embodiment, the array of the multiple image sources 1 and the multiple relay lenses 2 enables the human eye to see the image corresponding to the image of the image source 1 in a larger field of view, increases the size of exit pupil and makes the structure compact.

Fig. 6A illustrates the imaging of the collimation display sub-modules of the collimation display apparatus according to the present invention, and Fig. 6B illustrates the imaging of the collimation display sub-modules of the collimation display apparatus when the human eye is moving according to the present invention.

The relay lens 2 of the collimation display apparatus 100 according to above embodiment emits light in parallel, that is, the object point observed by the human eye 50 is at infinity. When the human eyes 50 move up, down, left or right within the parallel beams, all the beams received by the eye are parallel light. That is, the parallel light emitted through the relay lens 2 from the image of the image source 1 passes through the crystalline lens focuses on the focal point and the focal position is unchanged. In the collimation display apparatus 100 of the present embodiment, the human eye can move freely within the aperture of the relay lens 2, and the position of the image seen unchanged.

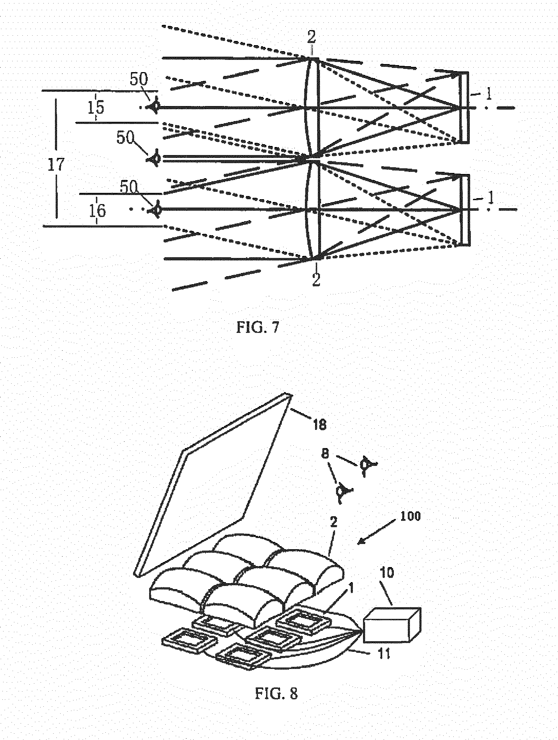

Fig. 7 illustrates the imaging of the collimation display sub-modules of the collimation display apparatus according to the present invention, the collimation display sub-modules being stitched together.

In the collimation display apparatus of the embodiment, two groups of collimation display sub-modules are stitched together, and two image sources 1 provide the same image. As shown in Fig. 7, when the human eye moves within the range 17, since the relay lens 2 emits parallel light of the same image, the image of the image source 1 can be observed when the eye is moving freely within the range 17.

Because the optical axes of the two groups of collimation display sub-modules are parallel, it is possible to avoid the occurrence of ghosting and bouncing when viewing the image in different positions.

Fig. 8 illustrates the structure of a preferred embodiment of the transflective vehicle-mounted or airborne transflective head-up display apparatus according to the present invention. The transflective head-up display apparatus according to the preferred embodiment in present invention comprises the collimation display apparatus 100 and a transparent reflecting mirror 18. The collimation display apparatus 100 is as described above, and details are not described herein again. The transparent reflecting mirror 18 is arranged on an emergent light path of the collimation display apparatus 100, and reflects the image emitted from the collimation display apparatus 100 to form a virtue image at infinity. In this embodiment, the reflectivity of the transparent reflecting mirror 18 is 20%. The human eye can both see the outside scenery through the transparent reflecting mirror 18 and can also see the virtual image corresponding to the image of the image source 1 formed at the infinite region. The transflective head-up display apparatus of the present embodiment has a total field of view size of about 140 mm $^*$ 70 mm and an eye distance of 500 mm. When the human eye is moving over a large area, the full-field image can still be clearly seen.

In the transflective head-up display apparatus described above, the transparent reflecting mirror 18 may be a front windshield of a vehicle, so that the information about the vehicle, such as the fuel level, the rotation speed and the vehicle speed, can be superposed on the infinite front of the car. It may also be used to display navigation information, infrared image contour, safety tips and other information, but not limited thereof. Drivers can always see these information while paying attention to the road conditions without having to look down at the meters and navigation information etc, thus greatly reducing the accident rate. With the infrared function of penetrating fog, rain and snow, the transflective head-up display apparatus can effectively improve the driving safety in bad weathers.

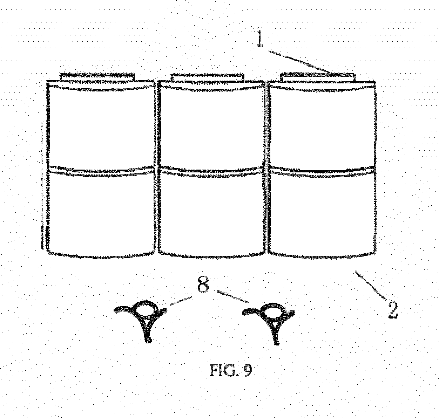

Fig. 9 illustrates the structure of a preferred embodiment of the direct-view collimation display apparatus according to the present invention. The direct-view collimation display apparatus according to the preferred embodiment comprises a plurality of the aforementioned collimation display apparatuses 100. The direct-view collimation display apparatus of the present embodiment can replace existing direct-view displays, such as televisions, computer monitors, PADs, MP4, cell phones, instrument displays, and other electronic product displays. According to the direct-view collimation display apparatus of the embodiment, since the displayed image is at infinity, the ciliary muscle is in a relaxed state when the human eye is viewing the image, which can effectively reduce the incidence of myopia. In addition, it can also lower the requirement on the distance between the display and the human eye, whereby the space occupied by the display can be greatly reduced while a sufficiently large field of view is ensured.

According to the collimation display apparatus and the head-up display apparatus of the present invention, a plurality of image sources are stitched to form an array of image sources and a plurality of relay lenses are stitched form an array of relay lenses, thus achieving a compact structure, small weight and large field of view.

According to the collimation display apparatus and the head-up display apparatus of the present invention, since multiple image sources are provided, the requirement on the brightness of the image sources is greatly reduced compared with the single image source in the conventional method. For example, in the conventional waveguide-type collimation display apparatus (see Fig. 1), the field of view achieved by a single image resource and relay lens is 10mm $^*$ 10mm and then scaled to 100mm $^*$ 100mm by a pupil expander (waveguide element). When it is required that the display brightness is 1,000cd/m$^2$, the brightness of the image source should reach at least 100,000cd/m$^2$. In contrast, according to the collimation display apparatus and the head-up display apparatus of the present invention, a single image source with a brightness of 1,000cd/m$^2$ can provide a final display brightness of 1,000cd/m$^2$

The pupil expander (waveguide element) of the conventional waveguide-type collimation display apparatus has limit on the wavelength range, as a result, only monochromatic narrow-spectrum display can be achieved. However, the collimating display apparatus and the head-up display apparatus of the present invention do not need a pupil expander (waveguide element), and can easily realize full-color display. At the same time, because the requirement on the brightness of the image source is reduced, it is made possible to use low-brightness color image sources on the head-up display apparatus.

According to the collimating display apparatus and the head-up display apparatus of the present invention, because each image source can work independently, even if some of the image sources fail, only a portion of the image is affected and the entire system can still operate, whereby great redundancy is obtained and the system reliability can be effectively improved.

While the invention has been described by way of example and in terms of the preferred embodiments, it is to be understood that the invention is not limited to the disclosed embodiments. It is intended to cover various modifications and arrangements provided by the appended claims.

## Claims

1. A collimation display apparatus (100), comprising:

    at least two groups of collimation display sub-modules, each group of collimation display sub-modules comprises an image source (1) and a relay lens (2),
wherein the image source (1) provides an image; and the relay lens (2) is arranged on an emergent light path of the image source (1), and projects the image provided by the image source (1) into a virtual image at infinity, the relay lens (2) comprises a plurality of optical lenses arranged along an axis, the contour of the optical lens, which is on the outermost side and the farthest from the image source (1), is rectangular, and the relay lens (2) is densely arranged,
**characterized in that**
the relay lens (2) comprises:
a first lens element (L1) comprising a first lens surface (M1) on which the diaphragm is disposed and a second lens surface (M2), having a positive focal power and convex to the image space; a second lens element (L2) comprising a third lens surface (M3) and a fourth lens surface (M4), having a negative focal power and convex to the image space; a third lens element (L3); a fourth lens element (L4); wherein the third and fourth lens elements are a doublet having a positive focal power and comprising a fifth lens surface (M5), a sixth lens surface (M6) and a seventh lens surface (M7); a fifth lens element (L5) that is a biconvex lens having a positive focal power and comprising an eighth lens surface (M8) and a ninth lens surface (M9); and a sixth lens element (L6) having a negative focal power and comprising a tenth lens surface (M10) and a eleventh lens surface (M11),.

2. The collimation display apparatus (100) according to claim 1, further comprising an image source driving circuit (10) for providing drive and image data for each of the image sources (1).

3. The collimation display apparatus (100) according to claim 1, wherein the exit pupil of each of the relay lenses (2) is on the outermost optical lens from the image source (1).

4. The collimation display apparatus (100) according to claim 1, wherein the optical lens close to the image source (1) has a smaller aperture that the outermost optical lens.

5. The collimation display apparatus (100) according to claim 2, wherein the image source driving circuit (10) provides same image data for the image sources (1).

6. The collimation display apparatus (100) according to claim 1, wherein the image source (1) may be a liquid crystal display panel, a liquid crystal on silicon panel, an organic light emitting diode panel, a plasma display panel, a digital micromirror device panel, or a laser scanner.

7. The collimation display apparatus (100) according to claim 1, wherein the optical axes of the collimation display sub-modules are parallel to each other.

8. Use of the collimation display apparatus (100) according to any of claims 1 to 7 in a vehicle-mounted or airborne head-up display apparatus.

9. A vehicle-mounted or airborne head-up display apparatus, comprising:

   the collimation display apparatus (100) according to any of claims 1 to 7; and
   a transparent reflecting mirror (18) that is arranged on an emergent light path of the collimation display apparatus (100) and reflects an image emitted from the collimation display apparatus (100) at infinity.

10. The vehicle-mounted or airborne head-up display apparatus according to claim 9, wherein the transparent reflecting mirror (18) is a front windshield of a vehicle or an aircraft.

**Patentansprüche**

1. Kollimationsanzeigevorrichtung (100), umfassend:

   mindestens zwei Gruppen aus Kollimationsanzeige-Untermodulen, wobei jede Gruppe von Kollimationsanzeige-Untermodulen eine Bildquelle (1) und eine Relaislinse (2) umfasst,
   wobei die Bildquelle (1) ein Bild bereitstellt; und die Relaislinse (2) an einem ausfallenden Lichtweg der Bildquelle (1) angeordnet ist und das Bild, das von der Bildquelle (1) bereitgestellt wird, in ein virtuelles Bild auf Unendlichkeit projiziert, wobei die Relaislinse (2) eine Vielzahl von optischen Linsen umfasst, die entlang einer Achse angeordnet sind, die Kontur der optischen Linse, die sich auf der äußersten Seite und am weitesten von der Bildquelle (1) entfernt befindet, rechtwinklig ist, und die Relaislinse (2) dicht angeordnet ist,

**dadurch gekennzeichnet, dass**

die Relaislinse (2) umfasst:

ein erstes Linsenelement (L1), umfassend eine erste Linsenoberfläche (M1), auf der die Membran angeordnet ist, und eine zweite Linsenoberfläche (M2), die eine positive fokussierende Wirkung aufweist und konvex zu dem Bildraum ist; ein zweites Linsenelement (L2), umfassend eine dritte Linsenoberfläche (M3) und eine vierte Linsenoberfläche (M4), die eine negative fokussierende Wirkung aufweisen und konvex zu dem Bildraum sind; ein drittes Linsenelement (L3); ein viertes Linsenelement (L4); wobei das dritte und vierte Linsenelement eine Dublette mit einer positiven fokussierenden Wirkung sind und eine fünfte Linsenoberfläche (M5), eine sechste Linsenoberfläche (M6) und eine siebte Linsenoberfläche (M7) umfassen; ein fünftes Linsenelement (L5), das eine bikonvexe Linse mit einer positiven fokussierenden Wirkung ist und eine achte Linsenoberfläche (M8) und eine neunte Linsenoberfläche (M9) umfasst; und ein sechstes Linsenelement (L6), das eine negative fokussierende Wirkung aufweist und eine zehnte Linsenoberfläche (M10) und eine elfte Linsenoberfläche (M11) umfasst.

2. Kollimationsanzeigevorrichtung (100) nach Anspruch 1, des Weiteren umfassend eine Bildquellen-Treiberschaltung (10) zum Bereitstellen einer Ansteuerung und von Bilddaten für die einzelnen Bildquellen (1).

3. Kollimationsanzeigevorrichtung (100) nach Anspruch 1, wobei die Austrittspupille der einzelnen Relaislinsen (2) die äußerste optische Linse von der Bildquelle (1) ist.

4. Kollimationsanzeigevorrichtung (100) nach Anspruch 1, wobei die optische Linse nahe der Bildquelle (1) eine kleinere Öffnung als die äußerste optische Linse aufweist.

5. Kollimationsanzeigevorrichtung (100) nach Anspruch 2, wobei die Bildquellen-Treiberschaltung (10) dieselben Bilddaten für die Bildquellen (1) bereitstellt.

6. Kollimationsanzeigevorrichtung (100) nach Anspruch 1, wobei die Bildquelle (1) ein Flüssigkristallanzeigefeld, ein Flüssigkristall-auf-Silizium-Feld, ein organisches lichtemittierendes Diodenfeld, ein Plasma-Anzeigefeld, ein digitales Mikrospiegelvorrichtungsfeld oder ein Laserscanner sein kann.

7. Kollimationsanzeigevorrichtung (100) nach Anspruch 1, wobei die optischen Achsen der Kollimationsanzeige-Untermodule parallel zueinander angeordnet sind.

8. Verwendung der Kollimationsanzeigevorrichtung (100) nach einem der Ansprüche 1 bis 7 in einer fahrzeugmontierten oder luftgestützten Headup-Anzeigevorrichtung.

9. Fahrzeugmontierte oder luftgestützte Headup-Anzeigevorrichtung, umfassend:

die Kollimationsanzeigevorrichtung (100) nach einem der Ansprüche 1 bis 7; und
einen transparenten reflektierenden Spiegel (18), der an einem ausfallenden Lichtweg der Kollimationsanzeigevorrichtung (100) angeordnet ist und ein Bild, das von der Kollimationsanzeigevorrichtung (100) emittiert wird, auf Unendlichkeit reflektiert.

10. Fahrzeugmontierte oder luftgestützte Headup-Anzeigevorrichtung nach Anspruch 9, wobei der transparente reflektierende Spiegel (18) eine vordere Windschutzscheibe eines Fahrzeugs oder eines Flugzeugs ist.

**Revendications**

1. Appareil d'affichage à collimation (100), comprenant:

au moins deux groupes de sous-modules d'affichage par collimation, chaque groupe de sous-modules d'affichage par collimation comprend une source d'image (1) et une lentille relais (2),
dans lequel la source d'image (1) fournit une image; et la lentille relais (2) est disposée sur un trajet lumineux émergent de la source d'image (1), et projette l'image fournie par la source d'image (1) dans une image virtuelle à l'infini, la lentille relais (2) comprend une pluralité de lentilles optiques disposées le long d'un axe, le contour de la lentille optique, qui est sur le côté le plus extérieur et le plus éloigné de la source d'image (1), est rectangulaire, et la lentille relais (2) est disposée de manière dense,
**caractérisé en ce que**
la lentille relais (2) comprend:
un premier élément de lentille (L1) comprenant une première surface de lentille (M1) sur laquelle est disposé le diaphragme et une deuxième surface de lentille (M2), ayant une puissance focale positive et convexe par rapport à l'espace image; un deuxième élément de lentille (L2) comprenant une troisième surface de lentille (M3) et une quatrième surface de lentille (M4), ayant une puissance focale négative et convexe par rapport à l'espace image; un troisième élément de lentille (L3) ; un quatrième élément de lentille (L4); dans lequel les troisième et quatrième éléments de lentille sont un doublet ayant une puissance focale positive et comprenant une cinquième surface de lentille (M5), une sixième surface de lentille (M6) et une septième surface de lentille (M7); un cinquième élément de lentille (L5) qui est une lentille biconvexe ayant une puissance focale positive et comprenant une huitième surface de lentille (M8) et une neuvième surface de lentille (M9); et un sixième élément de lentille (L6) ayant une puissance focale négative et comprenant une dixième surface de lentille (M10) et une onzième surface de lentille (M11).

2. Appareil d'affichage par collimation (100) selon la revendication 1, comprenant en outre un circuit de commande de source d'image (10) pour fournir des données de commande et d'image pour chacune des sources d'image (1).

3. Appareil d'affichage par collimation (100) selon la revendication 1, dans lequel la pupille de sortie de chacune des lentilles relais (2) se trouve sur la lentille optique la plus extérieure de la source d'image (1).

4. Appareil d'affichage par collimation (100) selon la revendication 1, dans lequel la lentille optique proche de la source d'image (1) a une ouverture plus petite que la lentille optique la plus extérieure.

5. Appareil d'affichage par collimation (100) selon la revendication 2, dans lequel le circuit de commande de la source d'image (10) fournit les mêmes données d'image pour les sources d'image (1).

6. Appareil d'affichage par collimation (100) selon la revendication 1, dans lequel la source d'image (1) peut être un panneau d'affichage à cristaux liquides, un panneau à cristaux liquides sur silicium, un panneau à diodes électroluminescentes organiques, un panneau d'affichage à plasma, un panneau numérique à micro-miroirs ou un scanner laser.

7. Appareil d'affichage par collimation (100) selon la revendication 1, dans lequel les axes optiques des sous-modules d'affichage par collimation sont parallèles entre eux.

8. Utilisation de l'appareil d'affichage par collimation (100) selon l'une des revendications 1 à 7 dans un appareil d'affichage tête haute monté sur un véhicule ou embarqué.

9. Appareil d'affichage tête haute embarqué ou aéroporté, comprenant:

   l'appareil d'affichage par collimation (100) selon l'une quelconque des revendications 1 à 7; et
   un miroir réfléchissant transparent (18) qui est disposé sur un trajet lumineux émergent de l'appareil d'affichage par collimation (100) et qui réfléchit une image émise par l'appareil d'affichage par collimation (100) à l'infini.

10. Appareil d'affichage tête haute embarqué ou aéroporté selon la revendication 9, dans lequel le miroir réfléchissant transparent (18) est un pare-brise avant de véhicule ou d'avion.

FIG. 1

FIG. 2

FIG. 3A

FIG. 3B

FIG. 3C

FIG. 4

FIG. 5

FIG. 6A

FIG. 6B

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014055863 A1
- WO 2014180991 A1

- CN 102880337